# EUROPÄISCHE PATENTANMELDUNG

(11) **EP 1 604 564 A1**
(43) Veröffentlichungstag der Anmeldung: **14.12.2005**
(21) Anmeldenummer: 05009970.4
(22) Anmeldetag: 06.05.2005
(51) Int. Cl.: A01F 15/07

(54) **Maschine zum Aufnehmen und Pressen von landwirtschaftlichem Erntegut**

(30) Priorität: 11.05.2004 DE 102004023704
(71) Anmelder: Maschinenfabrik Bernard Krone GmbH, 48480 Spelle (DE)
(72) Erfinder: Krone, Bernard, Dr.-Ing. E.h., 48480 Spelle (DE)

(57) **Zusammenfassung**

Maschine zum Aufnehmen und Pressen von landwirtschaftlichem Erntegut wie beispielsweise Heu, Stroh, Gras und dergleichen zu rollenförmigen Ballen mit einer klappbaren Wickelkammer und mit zumindest einer in eine Umlaufbewegung versetzbaren Ballenformeinrichtung, die zumindest ein mit einer Querprofilierung (6.3) versehenes Antriebselement (6) aufweist, wobei die Ballenformeinrichtung über einen eine Querprofilierung aufweisenden Antriebsriemen (4) mit dem Antriebselement (6) antreibbar ist, wobei die Querprofilierung des Antriebsriemens (4) und die Querprofilierung (6.3) des Antriebselementes (6) eine unterschiedliche Profilierungsteilung (Z6, T4) aufweisen, wobei die Teilung (T4) der Querprofilierung (20) des Antriebsriemens (4) und die Teilung (Z6) der Querprofilierung (6.3) des Antriebselementes (6) derart aufeinander abgestimmt sind, daß zwischen ihnen eine Kombination aus Kraft- und Formschluss einstellbar ist.

## Beschreibung

Die Erfindung bezieht sich auf eine Maschine zum Aufnehmen und Pressen von landwirtschaftlichem Erntegut wie beispielsweise Heu, Stroh, Gras oder dergleichen zu rollenförmigen Ballen mit einer klappbaren Wickelkammer und mit zumindest einer in eine Umlaufbewegung versetzbaren Ballenformeinrichtung, die zumindest ein mit einer Querprofilierung versehenes Antriebselement aufweist.

Eine derartige Maschine, die als variable Rundballenpresse ausgebildet ist, ist aus der DE 40 12 753 C2 bekannt. Bei dieser vorbekannten Maschine haben die Querstäbe des Ballenförderers an ihren Stirnenden jeweils einen im wesentlichen plattenförmigen Querstabbefestigungsanschluß, der über Bolzen an zwei benachbarten Kettenglieder einer im Bereich von Gehäuseseitenwandteilen der Maschine angeordneten Wickelkette lösbar festgelegt ist. Das Querstabbefestigungselement ist als starres Plattenelement ausgebildet, das mit den Querstäben verschweißt ist. Mit der Wickelkette ist dieser Plattenkörper über Bolzen festzulegen. Mit einer so ausgebildeten Ballenformeinrichtung lassen sich zwar durchaus die notwendigen Ballenformkräfte auf den zu formenden Ballen übertragen, im Alltagsbetrieb jedoch verursachen die Plattenelemente und die Kettenelemente der Wickelkette nicht unerhebliche Betriebsgeräusche und unterliegen einem nicht unerheblichen Verschleiß, so daß der Wunsch besteht, hier Abhilfe zu schaffen und eine bei gleichzeitig erhöhter Haltbarkeit geräuschärmere Maschine der gattungsgemäßen Bauart zur Verfügung zu stellen.

Es ist daher Aufgabe der vorliegenden Erfindung, eine Maschine der eingangs genannten Art zu schaffen, bei der die Ballenformeinrichtung verschleißarm aber auch geräuscharm zu arbeiten in der Lage ist.

Zur Lösung dieser Aufgabe zeichnet sich die Maschine der eingangs genannten Art dadurch aus, daß die Querprofilierung des Antriebsriemens und die Querprofilierung des Antriebselementes eine unterschiedliche Profilierungsteilung aufweisen, wobei die Teilung der Querprofilierung des Antriebsriemens und die Teilung der Querprofilierung des Antriebselementes derart aufeinander abgestimmt sind, daß zwischen ihnen eine Kombination aus Kraft- und Formschluss einstellbar ist

Damit ist eine Maschine zur Verfügung gestellt, bei der der Antrieb der Ballenformeinrichtung über die unterschiedliche Teilung der Querprofilierung einerseits des Antriebsriemens und andererseits des Antriebselementes sowohl kraft- als auch formschlüssig zu arbeiten in der Lage ist. Das Antriebselement und der Antriebsriemen bestehen vorzugsweise zumindest bereichsweise aus einem Gummi- oder Kunststoffmaterial, wobei eine Gewebelage vorgesehen sein kann. Das Antriebselement kann einen Stahlträger aufweisen, auf den ein Zahnrad bzw. Kunststoffritzel oder auch Rillenelemente aufvulkanisiert sind. Im Betrieb können daher Zahnrad oder aber Rillenelemente und Antriebsriemen aufgrund der unterschiedlichen Teilungen so aufeinander kommen, daß Stege des Riemens bis zur Auswölbung bzw. bis zum Fußkreis des Antriebselementes eingreifen und sich formschlüssig an dessen Querrillen - bzw. Zahnelemente anlehnen, zum Teil aber auch direkt auf dem Querrillen- bzw. Zahnelement des Antriebselementes aufsitzen und diesen teilweise eindrücken. Damit ist ein außerordentlich geräuscharmer Lauf der Ballenformeinrichtung zu erzielen. Darüber hinaus sind Schnittkanten für zwischen dem Antriebsriemen und dem Antriebselement befindliches Erntegut darzustellen, da sich vielfältige Verkeilungsmöglichkeiten des Antriebsriemens auf dem Antriebselement ergeben und damit ein außerordentlich guter Kraftschluss erreichbar ist. Insgesamt ist damit eine Antriebsverbindung zur Verfügung gestellt, bei der Wickeltendenzen des Ernteguts im Antriebsbereich wirksam vorzubeugen sind.

Verschmutzungsrisiken an dem Antriebselement sind durch diese Verkeilungsmöglichkeiten weitgehend zu verhindern, weil anhaftendes Erntegut zwischen Antriebselement und Antriebsriemen zerkleinert und fortgeführt wird.

In besonders vorteilhafter Weise ist die Breite der Stege des Antriebsriemens größer als die Breite von Stegen bzw. Zahnelementen auf dem Antriebselement, so daß der Antriebsriemen auf einer oder sogar auf beiden Seiten eines Zahnelementes des Antriebselementes in den Zahnzwischenraum eingreifen kann. Ist das Material des Antriebselementes zumindest mit einer gewissen Elastizität versehen, kann ein Quersteg des Antriebselementes bzw. eine Kante eines Quersteges teilweise in Richtung der Auswölbung bzw. des Fußkreises zwischen zwei Zahnelementen des Antriebselementes hineingebogen werden. Das erhöht die Wirkung der Erzeugung von Schnittkanten für zwischen Riemen und Antriebselement befindlichem Erntegut. Aufgrund der vielfältigen Verkeilungsmöglichkeiten des Antriebsriemens auf dem Antriebselement ergibt sich ein erhöhter Kraftschluss zwischen Antriebselement und Antriebsriemen. Insgesamt ist damit eine außerordentlich verschleißarme und sichere Antriebsverbindung für die Ballenformeinrichtung darzustellen, die darüber hinaus noch außerordentlich geräuscharm läuft.

Weitere Vorteile und Ausgestaltungen der Erfindung ergeben sich aus weiteren Unteransprüchen, der nachfolgenden Beschreibung und der Zeichnung. In der Zeichnung zeigen:
- Fig. 1: eine schematische Seitenansicht eines Ausführungsbeispiels einer Ballenpresse mit variablem Ballenformraum,
- Fig. 2: eine Detaildraufsicht auf einen Antriebsriemen mit angebundenem Querstab,
- Fig. 3: eine Querschnittsdarstellung des Ausführungsbeispiels nach Fig. 2,
- Fig. 4: eine perspektivische Darstellung des Ausführungsbeispiels nach den Fig. 2 und 3, und
- Fig. 5: eine Detailseitenansicht auf ein Ausführungsbeispiel eines Antriebselementes in Gestaltung einer gezahnten Antriebsrolle sowie eines mit dieser kämmenden Antriebsriemens.

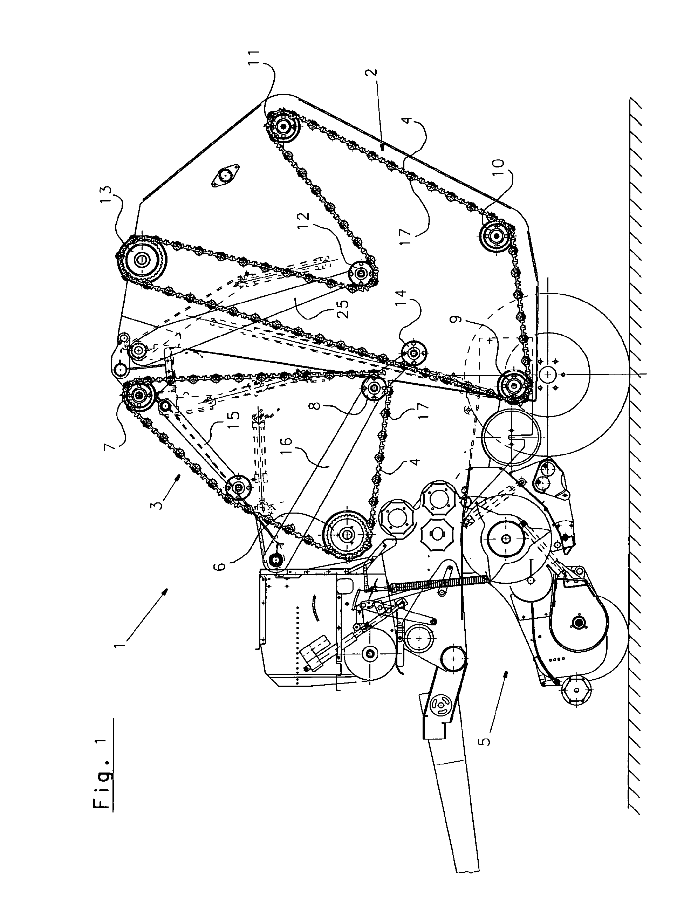

In Fig. 1 ist als Ausführungsbeispiel der Erfindung eine Maschine zum Aufnehmen und Pressen von landwirtschaftlichem Erntegut zu rollenförmigen Ballen gezeigt, die einen variablen Ballenformraum mit zwei einander zugeordnete Ballenformeinrichtungen 2 und 3 aufweist. Die Ausbildung der Ballenformeinrichtung 2, 3 mit in Endbereichen gefalteten Querstäben 17 und endseitig vorzusehenden Antriebsriemen 4 ist jedoch auch bei Maschinen mit völlig übereinstimmenden Vorteilen verwendbar, die nur eine Ballenformeinrichtung haben und nach dem Festkammerprinzip arbeiten bzw. Ballenformphasen haben, in denen Festkammerprinzipien verwirklicht sind.

Die als Rundballenpresse 1 ausgebildete Maschine hat neben den beiden Ballenformeinrichtungen 2 und 3 eine Erntegutaufnahmevorrichtung 5 sowie verschiedene Umlenkrollen 6, 7, 8, 9, 10, 11, 12, 13, 14, die teilweise ortsfest angeordnet sind und teilweise für eine Verlagerung der Ballenformeinrichtungen 2 und 3 bei anwachsendem Durchmesser des Ballens über Schwenkarme 15, 16, 25 nachgiebig gehaltert sind.

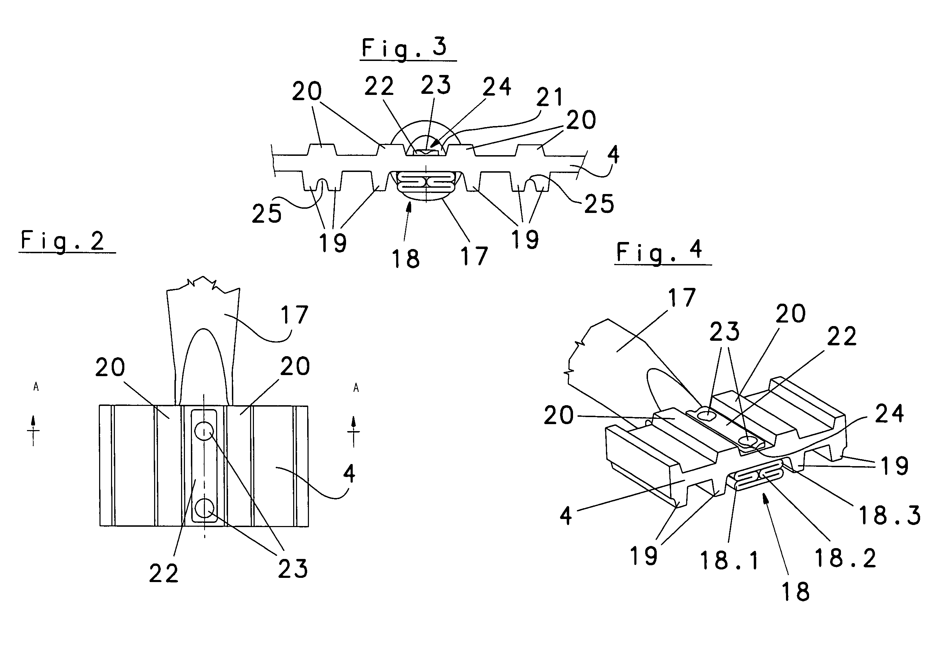

Die jeweiligen Ballenformeinrichtungen 2, 3 haben an ihren Endbereichen jeweils einen Antriebsriemen 4 aus Gummi oder einem Kunststoffmaterial und weisen vorzugsweise metallische Querstäbe 17 auf. Diese haben bei dem veranschaulichten Ausführungsbeispiel einen runden Querschnitt. In ihren Endbereichen haben sie jeweils eine Faltung 18, und zwar dergestalt, wie sehr deutlich aus den Fig. 3 und 4 hervorgeht, daß das geometrische Zentrum dieser Faltung 18 einen Abstand zur Mittellängsachse und mithin zum Zentrum des Rohres des Querstabs 17 aufweist, so daß es sich um eine asymmetrische Faltung handelt.

Dabei ist eine Dreifachfaltung vorgesehen, mit jeweils auf jeder Seite drei 180°-Faltungen in Gestaltung der Faltungen 18.1, 18.2 und 18.3. Daraus ergibt sich, daß es sich dabei um eine Faltung handelt, bei der der Seitenbereich des Rohres einmal eingeschlagen ist und die Faltungen - wie aus den Fig. 3 und 4 ersichtlich - zu einem flachen Paket zusammengedrückt wurden.

Die Faltung 18 bzw. das Paket der Faltung 18.1, 18.2 und 18.3 liegt direkt an einer Seite des Riemens 4 an, und zwar in einem Raum, der in der Ausführungsbeispielen nach den Fig. 3 und 4 durch nach unten weisende Querstege 19 begrenzt wird. Diese Querstege 19 haben dabei eine Hocherstreckung, die derart ist, daß sie in etwa der Höhe des Paketes der Faltungen entspricht bzw. ein wenig höher ausgebildet ist als die Faltungshöhe. Auf der diesen Stegen 19 gegenüberliegenden Fläche der Antriebsriemen 4 sind des weiteren Querstege 20 vorgesehen, wobei diese Querstege 20 in einem Bereich gegenüberliegend der Faltung 20 breiter ausgebildet sein können als die Stege 19, jedoch derart vorgesehen sind, daß sie eine Art Brücke zwischen den Stegen 19 und der Faltung 18 bilden, und mithin die Faltung 18 und die Stege 19 jeweils ein wenig überlappen. Dies ist sehr deutlich der Fig. 3 zu entnehmen. Zwischen diesen Stegen 20 ist in einer Nut 21 ein metallisches Plattenelement 22 vorgesehen als Widerlager, das an dem Riemen 4 anliegt. Der gefaltete Endbereich des Querstabs 17 ist über Niete 23, die den Antriebsriemen 4 durchsetzen, mit dem Metallplättchen 22 verbunden. In diesem Bereich, in dem die Niete 23 vorgesehen sind, ist aus Versteifungsgründen noch jeweils eine Sicke 24 vorgesehen.

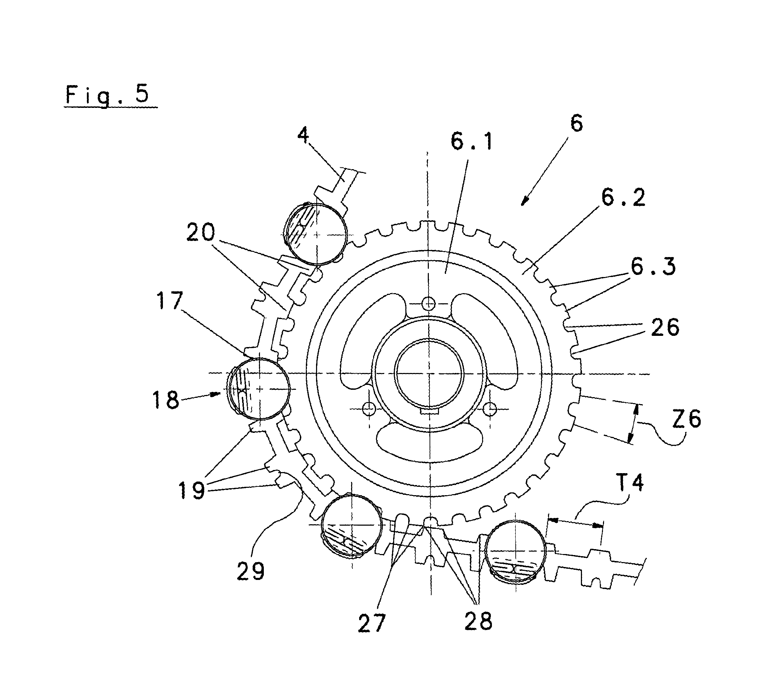

Wie im einzelnen näher Fig. 5 zu entnehmen ist, ist die Umlenkrolle 6 als Antriebselement für die Ballenformeinrichtung 3 ausgebildet. Diese besteht aus einem Stahlträger 6.1, auf den ein gezahnter Mantel 6.2 aus einem Kunststoffmaterial aufvulkanisiert ist. Die Teilung der Zahnelemente 6.3 des Antriebselementes 6 ist in Fig. 5 näher gekennzeichnet mit Z6.

Der Antriebsriemen 4 besteht ebenfalls aus einem Kunststoffmaterial und hat die Stege 19 und 20, wobei die Stege 20 an der dem Antriebselement 6 zugewandten Seite des Antriebsriemens 4 vorgesehen sind, und die Stege 19 an der dem Antriebselement 6 abgewandten Seite des Antriebsriemens. Das Teilungsmaß T4 des Antriebsriemens ist größer ausgebildet als das Teilungsmaß Z6 der Zahnelemente 6.3 des Antriebsrades 6. Das Unterschiedsmaß der Teilungen Z6 gegenüber T4 ist dabei derart aufeinander abgestimmt, daß zwischen dem Antriebsriemen 4 einerseits und dem Antriebsrad 6 andererseits während des Betriebes eine Kombination aus Kraft- und Formschluss vorliegt.

Zwischen zwei Stegen 19 auf der dem Antriebselement abgewandten Seite des Antriebsriemens 4 ist eine Auswölbung 29 vorgesehen, die zentral im Bereich des Steges 20 auf der gegenüberliegenden Seite des Antriebsriemens 4 angeordnet ist. Die Breite der Stege 20 ist auf den Fußkreis bzw. Auswölbung 26 im Bereich des Zahnrades 6.2 bzw. des Kunststoffmantels 6.2 des Antriebselementes 6 derart abgestimmt, daß der Steg 20 breiter ausgebildet ist als die Auswölbung 26. Die Stege sind darüber hinaus derart vorgesehen, daß sich Stegkanten in dem den Antriebselement zugewandten oberen Bereichen ergeben. Gleiches gilt für die Stege 6.3, so daß zwischen den Stegen 6.3 und den Stegen 20 einander zugewandte Schnittkanten 27 und 28 für das zwischen dem Antriebselement 6 und dem Antriebsriemen 4 befindliche Erntegut ausgebildet sind.

Im Betrieb können die Stege 20 des Antriebsriemens 4 bis zum Fußkreis der Auswölbung 26 des Antriebselementes eingreifen und sich formschlüssig an den Steg 6.3 des Antriebselementes anlehnen, zum Teil aber auch direkt auf den Steg 6.3 des Antriebselementes 6 aufsitzen und diesen teilweise eindrücken, wobei aufgrund der größeren Breite der Stege 20 des Antriebsriemens 4 dieser auf einer oder sogar auf beiden Seiten des Steges 6.3 des Zahnrades 6.2 in den Zwischenraum zwischen den Stegen 6.3 eingreift und aufgrund der Elastizität des Kunststoffmaterials die Kanten des Steges teilweise in Richtung der Auswölbung 26 hineingebogen werden. Aufgrund der vielfältigen Verkeilungsmöglichkeiten des Antriebsriemens 4 auf dem Antriebselement 6 bzw. dem Zahnrad 6.2 ergibt sich ein außerordentlich wirksamer Kraftschluss zwischen Antriebsriemen 4 und dem Antriebselement 6. Zudem läuft die Ballenformeinrichtung außerordentlich geräuscharm ab.

## Patentansprüche

1. Maschine zum Aufnehmen und Pressen von landwirtschaftlichem Erntegut wie beispielsweise Heu, Stroh, Gras und dergleichen zu rollenförmigen Ballen mit einer klappbaren Wickelkammer und mit zumindest einer in eine Umlaufbewegung versetzbaren Ballenformeinrichtung (2,3), die zumindest ein mit einer Querprofilierung (6.3) versehenes Antriebselement (6) aufweist, wobei die Ballenformeinrichtung (2,3) über einen eine Querprofilierung aufweisenden Antriebsriemen (4) mit dem Antriebselement (6) antreibbar ist, **dadurch gekennzeichnet, daß** die Querprofilierung des Antriebsriemens (4) und die Querprofilierung (6.3) des Antriebselementes (6) eine unterschiedliche Profilierungsteilung (Z6, T4) aufweisen, wobei die Teilung (T4) der Querprofilierung (20) des Antriebsriemens (4) und die Teilung (Z6) der Querprofilierung (6.3) des Antriebselementes (6) derart aufeinander abgestimmt sind, daß zwischen ihnen eine Kombination aus Kraft- und Formschluss einstellbar ist.

2. Maschine nach Anspruch 1, **dadurch gekennzeichnet, daß** die Querprofilierung (20) des Antriebsriemens (4) eine kleinere Teilung (T4) aufweist als die Querprofilierung (6.3) des Antriebselementes (6).

3. Maschine nach einem der Ansprüche 1 bis 2, **dadurch gekennzeichnet, daß** das Antriebselement (6) einen Stahlträger (6.1) aufweist, auf den ein Zahnrad (6.2) oder ein Querrillenelement aus einem Gummi- und/oder Kunststoffmaterial aufvulkanisiert ist.

4. Maschine nach einem der Ansprüche 1 bis 3, **dadurch gekennzeichnet, daß** der Antriebsriemen (4) Stege (20) als Querprofilierung aufweist, die jeweils breiter als zwischen den Stegen (6.3) der Querprofilierung des Antriebselementes (6) gelegene Auswölbungen (25) ausgebildet sind.

5. Maschine nach einem der Ansprüche 1 bis 4, **dadurch gekennzeichnet, daß** gegenüber den Stegen (20) der Querprofilierung des Antriebsriemens (4) auf der dem Antriebselement (6) abgewandten Antriebsriemenseite zwei Stege (19) mit einer dazwischenliegenden Auswölbung (29) vorgesehen sind.

6. Maschine nach einem der Ansprüche 1 bis 5, **dadurch gekennzeichnet, daß** Stege (20) der Querprofilierung des Antriebsriemens (4) und Stege (6.3) der Querprofilierung des Antriebselementes (6) einander zugewandte Kanten (27,28) aufweisen, die für das zwischen dem Antriebselement (6) und dem Antriebsriemen (4) befindliche Erntegut als Schnittkanten wirken.

7. Maschine nach einem der Ansprüche 1 bis 6, **dadurch gekennzeichnet, daß** an dem Antriebsriemen (4) Querstäbe (17) vorgesehen sind, die jeweils an ihrem endseitigen Verbindungsbereich mit dem Antriebsriemen (4) eine Faltung (18) aufweisen.

8. Maschine nach Anspruch 8, **dadurch gekennzeichnet, daß** die Querstäbe (17) an ihrem Verbindungsbereich mit dem Antriebsriemen (4) eine asymmetrische Faltung (18) haben.

9. Maschine nach Anspruch 7 oder 8, **dadurch gekennzeichnet, daß** die Querstäbe (17) an ihren Verbindungsbereichen mit dem Antriebsriemen (4) dreifach gefaltet sind.

10. Maschine nach einem der Ansprüche 7 bis 9, **dadurch gekennzeichnet, daß** die Faltung (18) durch die dem Antriebselement (6) abgewandten Querstege (19) des Antriebsriemens (4) seitlich begrenzt sind.

11. Maschine nach einem der Ansprüche 1 bis 10, **dadurch gekennzeichnet, daß** die Querstege (19) des Antriebsriemens (4) die Faltung (18) mit Abstand begrenzen.

12. Maschine nach Anspruch 11, **dadurch gekennzeichnet, daß** die Höhe der Faltung (18) der Querstäbe (17) kleiner als die oder gleich der Höhe der benachbarten Querstege (19) des Antriebsriemens (4) ist.

13. Maschine nach einem der Ansprüche 1 bis 12, **dadurch gekennzeichnet, daß** die Höhe der Faltung (18) der Querstäbe (17) kleiner als die oder gleich der Höhe der benachbarten Querstege (19) des Antriebsriemens (4) ist.

14. Maschine nach einem der Ansprüche 1 bis 13, **dadurch gekennzeichnet, daß** die Querstäbe (17) mit dem Antriebsriemen (4) vernietet sind.

15. Maschine nach einem der Ansprüche 1 bis 14, **dadurch gekennzeichnet, daß** die Querstäbe (17) mit dem Antriebsriemen (4) unter Zuhilfenahme eines Plattenelementes (22) mit dem Antriebsriemen (4) verbunden sind, wobei das Plattenelement (22) auf der der Faltung (18) des Querstabes (17) abgewandten Seite des Antriebsriemens (4) vorgesehen ist.

16. Maschine nach Anspruch 15, **dadurch gekennzeichnet, daß** das Plattenelement (22) mit einer Sicke (24) versehen ist.

17. Maschine nach einem der Ansprüche 1 bis 16, **dadurch gekennzeichnet, daß** der Antriebsriemen (4) an seiner der Faltung (18) abgewandten Seite Nuten (21) und Stege (20) aufweist.

18. Maschine nach Anspruch 17, **dadurch gekennzeichnet, daß** die Breite der Faltung (18) im wesentlichen der Breite einer Nut (21) entspricht und/oder diese von ihrer Breitenerstreckung her überlappt.

19. Maschine nach einem der Ansprüche 1 bis 18, **dadurch gekennzeichnet, daß** das Plattenelement (22) in der Nut (21) gelegen ist.
